Europäisches Patentamt

European Patent Office

Office européen des brevets

(11) Publication number: **0 241 071 B1**

# EUROPEAN PATENT SPECIFICATION

(45) Date of publication of patent specification: **02.01.92**   (51) Int. Cl.5: **G06F 15/72**, G06F 15/60

(21) Application number: **87200510.3**

(22) Date of filing: **20.03.87**

(54) **A method of generating and processing models of two-dimensional or three-dimensional objects in a computer and of reproducing said models on a display.**

(30) Priority: **02.04.86 NL 8600831**

(43) Date of publication of application:
**14.10.87 Bulletin 87/42**

(45) Publication of the grant of the patent:
**02.01.92 Bulletin 92/01**

(84) Designated Contracting States:
**DE FR GB NL**

(56) References cited:

PROCEEDINGS 1ST INTERNATIONAL CON-
FERENCE ON COMPUTER WORKSTATIONS,
11th - 14th November 1985, San Jose, Cali-
fornia, US, pages 144-150, IEEE; J. GLICKS-
MAN: "Identifying objects in interactive
workstation environments"

COMPUTERS & GRAPHICS, vol. 6, no. 3, 1982,
pages 97-100, Pergamon Press, Ltd., Headington Hill, Oxford, GB; N. MAGNENAT-
THALMANN et al.: "A multilevel graphics
system based on top-down methodology"

IBM JOURNAL OF RESEARCH AND DEVEL-
OPMENT, vol. 24, no. 1, January 1980, pages
64-74, New York, US; M.A. WESLEY et al.: "A
geometric modeling system for automated
mechanical assembly"

ELECTRONIC DESIGN, vol. 33, no. 11, 16th
May 1985, pages 50,52, Hasbrouck Heights,
New Jersey, US; M. SCHINDLER: "Integrated
graphics enter the picture to aid expert sys-
tems"

(73) Proprietor: **Océ-Nederland B.V.**
**St. Urbanusweg 43**
**NL-5914 CC Venlo(NL)**

(72) Inventor: **Oosterholt, Ron Hermanus**
**Theodorus**
**Parade 80 b**
**NL-5911 CE Venlo(NL)**

(74) Representative: **Hanneman, Henri W.A.M.**
**Océ-Nederland B.V. Patents and Information**
**Postbus 101**
**NL-5900 MA Venlo(NL)**

**Description**

This invention relates to a CAD-system using a method of generating and processing models of two or three dimensional objects in a computer and of reproducing said models on a display. Methods of this kind are used in computer aided design (CAD) and are performed by the computer by means of an appropriate program. The object of the method is so to organise the exchange of information between the computer and the user via the various connected units that use of the computer is facilitated. Such methods and the programs and peripherals required for their performance are together also known as a user-interface.

One of the objects of the user-interface is that the object represented in the computer in the form of abstract models should be displayed to the user in clear and conveniently arranged forms. Another important object is to give the user facilities for the intentional generation and modification of the models in the computer, by inputting corresponding commands. The form in which the commands can be input by the user must as far as possible be in keeping with the experience and spatial imagination of the user. Inputting of the commands should also be as quickly and easily as possible so that the user is not distracted by complex inputting operations, such as occur, for example, when inputting a fairly long text by means of a keyboard or the like.

Known methods in accordance with the preamble meet these requirements by generating the objects by their abstract representation in the computer by operations comparable to the handling of the physical objects by man. For example, geometric operations coincide with the movements of physical objects in space and an operation such as connecting two elements corresponds to an action such as pasting two elements together. The inputting of commands for performing such operations is facilitated by the use of a pointer (cursor), it being possible to move the pointer over the display by means of a suitable inputting device, e.g. a mouse, a joystick, or the like. In this way it is possible for the operands to be shown on the display directly (the operands are the elements with which the command must be executed). The pointer can also be used to indicate the parameters for geometric commands, e.g. the distance by which an elements is to be moved over the display, or the angle through which the element is to be rotated, by drawing the associated factor or angle on the display by means of the pointer. In order to indicate also the type of command to be executed by means of the pointer, it is also known to show a menu on the display in which the commands are shown by words and from which a choice can be made.

In the known methods, the objects are shown on the display usually in the form of "wire models", in which the sides of the object are reproduced by lines. A single object is usually represented by a single image, involving a perspective view, a projection, a surface view, top view or the like, or a cross-section. To increase the surveyability, it is also known to mark concealed lines by changes in colour or brightness or to reproduce the different surfaces of the object in different colours or grey levels.

Nevertheless, the surveyability of the known user-interfaces is inadequate for showing two-dimensional images of complicated three-dimensional objects. In the case of objects having a complicated construction and consisting of large numbers of different elements, determination of the structure of the object by reference to one single two-dimensional image usually cannot be clearly defined, and that means that it is impossible unambiguously to determine which elements are interconnected or which elements are adjacent to one another, and which elements are not directly interconnected. Although it is possible to resolve such problems by viewing the image from a different angle, it requires relatively considerable computer time and errors in the interpretation of these images cannot be precluded.

In the "Proceedings 1st International Conference on Computer Workstations, 11-14 Nov. 1985, San Jose, California, US, pages 144-150, IEEE; J. Glicksman: "Identifying objects in interactive workstation environments" an interactive systems is disclosed to create and manipulate objects on a display wherein each object is given a name to identify an object. To overcome name-forgetting or value-forgetting a session manager keeps track of the relationship of derivation by means of hierarchical structures.

From Computers & Graphics; Vol.6, No.3, 1982 pages 97-100, Pergamon Press, Ltd., Headington Hill, Oxford, GB, N. Magenat-Thalmann et al.: "A multilevel methodology" it is known to treat constructed graphical objects as hierarchies.

Lack of surveyability of the image is particularly important if the object has to be changed during further developments of the design. The modifications made by the designer or constructor usually comprise changes in the dimensions of the elements of the object or changes in the position of individual elements with respect to the other elements. In the case of such changes the dimensions and/or the positions of adjacent elements and elements connected to the element undergoing modification must be adjusted so that the model of the object always remains consistent. To enable these adjustments to be carried out correctly, the user must know the physical structure of the object. In such cases the designer's spatial imagination is subject to considerable demands. In addition, it is often very difficult or even impossible exactly to indicate by means of the pointer the individual elements on which certain operations have to be carried out. If the same operation must be executed simultaneously on a plurality of elements, then all the lines or surfaces requiring to be changed by those operations must be indicated one by one. The modification of parts of the model and the associated adjustment of the other parts is thus laborious and time-consuming in known user-interfaces and frequently leads to errors. This disadvantage is particularly felt if the modifications have to be carried out by means of a CAD system, for example in the case of the new development of components or the further development of existing parts. It is possible only with very great difficulty to determine any errors by reference to a single two-dimensional image reproduction and they are thus not noticed until a physical object has been made by means of the data stored in the CAD system.

Although it is possible in principle to implement in a CAD system programs by means of which such errors are traced at an early stage, this too requires considerable program effort and the computer time is increased accordingly so that a rapid dialogue between the computer and the user is prevented.

These difficulties can be obviated with a user-interface in which exchange of data between the computer and the user is carried out at a higher abstraction level which takes greater account of the physical structure of the object but nevertheless has a less narrow relationship to the geometric basic elements visible on the screen. However, systems of this kind are not adequately adapted to the method of the designer or technical draughtsman, and the use of this system is difficult for the traditionally trained designer to learn.

The object of the invention is to provide a method according to the preamble by means of which consistent changes to the representation of the model can be carried out with a reduced number of commands which are easy to input.

This object is achieved by the characterising part of claim 1.

According to the invention, in addition to the geometric shape of the object the computer particularly represents the physical structure of the object and shows it on the display in the form of a tree-like structural diagram, each element of the object being indicated by means of a specific word. The indication of an element built up of more sub-elements forms a junction in the tree structure. When the user wishes to perform a specific operation with an element of the object e.g. if he wishes to rotate or move the element or paste the element to another element of the object, he can identify the associated element, together with the associated sub-elements required to take part in the operation, by means of a single inputting step by marking the corresponding junction of the tree structure with the pointer. As a result, the quantity of work required in modifying the model is greatly reduced and the risk of individual sub-elements being forgotten in an operation carried out on an element built up of several sub-elements is precluded. The tree structure accordingly allows clear identification of the required elements if the display of the object represents more elements by one and the same line indistinguishably.

In the identification of the elements in the tree structure communication between the user and the computer is not on an image plane but on a symbolic plane. Nevertheless, the user does not have to use a different inputting medium, e.g. a keyboard. The inputting of commands is always by means of the pointer on the display so that the user can keep his attention directed at the screen and fully concentrate on the object being viewed.

By simultaneously representing the object and the tree structure on a display the user can see practically at a glance the geometric shape of the object and also the spatial relationship between the elements, which is not directly recognizable from the picture. This greatly facilitates interpretation of two-dimensional representations of three-dimensional objects and the physical structure of the object is made clearer and purposeful to the user by means of the tree structure.

If the image of the object on the display is built up step by step from simple geometric elements, the tree structure is displayed in parallel with this. Thus the tree structure constitutes at the same time a kind of record of the design process and enables the user to return to earlier stages in the design and to design and try out alternative models on the basis of an intermediate stage of the design. This meets the designer's normal procedure, in which he usually draws a model in a few lines and works out the details of the model only at a later stage.

The method can be adjusted so that the tree structure is adapted only in response to corresponding commands by the user. To ensure that the tree structure is adapted uninterruptedly, the user when inputting each new element can be asked to characterise that element and input it to the tree structure. It is also feasible for additions to the tree structure to take place automatically by marking the newly input elements by means of continuous numbers or greatly reduced representations or characterisation of the corresponding geometric figures. The new element will then be dealt with in the tree structure as a sub-element of an existing element. When a new element is added simultaneously to a number of existing elements, this can be shown by joining the associated branches of the tree structure so that a closed ring or a mesh is formed in the tree structure. In this case the tree structure shown on the screen can also be so adapted that a new word is input for the whole mesh and all the associated elements are treated as sub-elements of equal rank. Theoretically it is also possible for the user to change the hierarchical relationships between the elements by means of commands placed in the structure diagram. If the pointer is used to mark a specific element in the drawing or in the tree structure, the marked element is shown with all its associated sub-elements preferably by changing the colour or brighness on the display. In this way the relationship between the elements of the image and their associated words are clearly shown in the tree structure so that the user is informed as to what elements or groups of elements he is using. It is also possible to omit from the image of the object and/or the tree structure all those elements that are not selected so that the remaining elements or groups of elements can be accurately viewed and processed to an enlarged scale in the cases occurring.

The display shows four windows in the form of a 2 × 2 matrix. Three of the windows act as image windows to reproduce the front, side and top views of the object, while the fourth window is used to reproduce the structure diagram. This form of presentation and breakdown of the display is particularly adapted to the practice of the technical draughtsman and also enables the tree structure to be presented with great clarity of view. The display can also contain smaller windows containing a menu with the most usual commands and representations of geometric basic elements (icons), such as the square, pyramid, sphere and cylinder, which can be called up with the pointer to construct a model from these geometric basic elements.

The commands for the operations to be carried out on the elements are preferably shown in the form of a "pop-up" menu. In a pop-up menu the commands appear in a window. By means of the inputting device (the mouse) the menu can always be generated at that location of the display where the pointer is situated at any time so that the user's attention can be concentrated there. The type of commands appearing in the pop-up menus is preferably dependent on the instantaneous state of processing so that only the commands to be executed at that stage are presented. More particularly, when the pointer upon calling on the menu is situated in a window of the display reserved for the image reproduction of the model, the type of commands in the menu differs from the type of commands in the menu which appears when the pointer, upon calling on the menu, is situated in a window of the display reserved for the reproduction of the structure diagram.

In a preferred embodiment of the invention, the possibility is implemented of storing in the computer data concerning a number of complete screens which contain a text information keyed in via a keyboard or drawings drawn on the display by means of the mouse, pictures of other models, or the like. These stored display images are functionally comparable to a note pad and can be displayed additively on the screen by the user. In this way the model can be clarified by means of text information and it is possible to discuss changes to the model by means of sketches, and compare the model with other models. In another embodiment of the invention, facilities are provided to process information from the note pad in the model under treatment. By means of such methods it is possible for elements sketched in the form of sketches on the note pad to be input to the model simply as bodies of rotation of translation. Other features of the invention are described in the sub-claims.

A preferred embodiment of the invention will be explained in detail hereinafter with reference to drawings.

Figures 1 to 10 are examples of the information represented on a CAD system display during the various stages of the method according to the invention.

Figures 11 to 26 show the progress of the information appearing on the display in a specific embodiment of the method according to the invention.

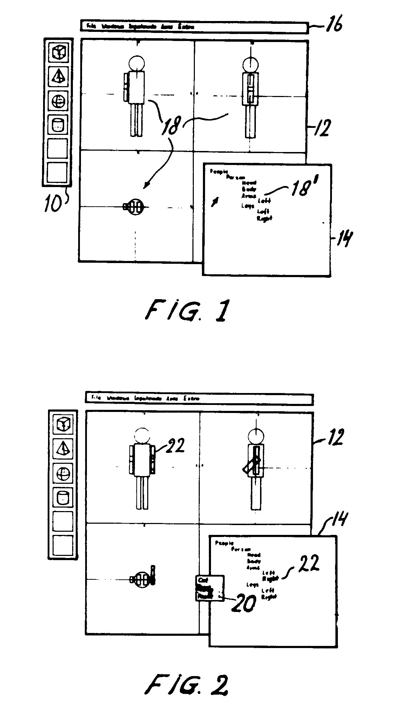

A user-interface functioning in accordance with a method of the invention will be described with reference to figures 1 to 10.

1. Hardware

The interface is made on a work station. This machine is designed around a 68010 microprocessor and has a high-resolution colour screen (1024 with 800 pixels). Each pixel can contain a colour from a palette of a maximum of 16 different colours. It is also equipped with a 55Mb hard disk. A keyboard and a mouse can be used for inputting information. The mouse has two buttons.

2. User-interface

4

### 2.1 Menus

Commands are given by making a selection from the menu. Menus ensure that the inexperienced user makes quick progress by clearly showing the commands that can be selected. Menus have a lower memory loading than, for example, an alphanumeric command language. The reasons for this are as follows:

- At all times it is clear what commands can be given,
- Menus enable commands to be presented structured in a simple manner.

Also, the mouse can be used for making a selection from the menu so that there is no need to change at any time from the mouse to the keyboard and vice-versa. The menus are displayed on the screen to ensure visual continuity (attention remains directed to the screen, in contrast, for example, to menus printed on a graphic tablet). Various forms of menus are possible. From of old static menus are frequently used, i.e. menus having a fixed place on the screen, such menus remaining visible for a fairly long time. This is in contrast to "pull down" menus which are visible only when the user wishes to make a choice therefrom. A third type is known as the "pop-up" menu. This has no fixed place but can appear at any desired place (usually near the cursor).

The most important disadvantage of the use of continuously visible menus at a fixed place is that the menu occupies a fairly considerable amount of space (on the screen or digitizer tablet) and that the clarity of the screen is reduced accordingly. These disadvantages are obviated by dynamic menus. Dynamic menus (e.g. pop-up menus) have the advantage of requiring less hand movements for selection, since the menu appaers close to the cursor (which is also the point of visual attention of the user).

The menu type used in the programme is the pop-up menu.

### 2.2 Mouse

The mouse is equipped with two buttons. On the one hand a small number of buttons such as this facilitates operation while the efficacy of use increases with a larger number. Two buttons (A and B) are used as a compromise between a more effective use, on the one hand, and a lower risk or errors, on the other hand. This provides a clear functional distinction between the two buttons used.

- Button A: is used for all "indication" operations: selection of a part of the model, selection of an icon.
- Button B: is used at all times to show a pop-up menu containing the commands valid at that time and at that place.

### 2.3 Windowing

Information is displayed graphically on a screen. It is important that overview should be retained in this case. A good solution to this is the use of windows: the screen is divided into graphic windows each having a specific type or group of information. In this way everything can be presented more logically and in structured fashion. Overlapping of the different windows gives more space on the screen and there is therefore less need to use a plurality of screens, and this has advantageous effect that the user's attention is also less divided.

### 3. Commands

A description of the interface in respect of windows and associated commands will be given in the following paragraphs.

### 3.1 General

The commands that can be given are in many cases not independent orders but have a purposeful effect; in other words they are associated with an operand. This operand is specified by the user (for example it indicates a part of the model), or is implied, i.e., the operand is contained in the command. There is also frequent involvement of one or more attributes, i.e. characteristics attributed to the operand. Two examples:

| (command) | (operand) | (attribute) |
|-----------|-----------|-------------|
| "Paint | foot | purple" |
| "Rotate | cylinder | 5 degrees" |

The above sequence of command, operand and attribute is not essential. For example, a different sequence is frequently used in the programme (select the cylinder, call up the command Rotate and indicate the rotation). If a command lacks the operand it is in principle impossible to execute the command.

3.2 Commands in windows

A number of windows appears when the program is started. (Fig. 1):
- Icon window 10
- Design window 12: window with the graphic representation of the model
- Structure window 14: window with the structural representation of the model
- Command window 16

3.3 Icon window

The icon window 10 is used to select a primitive, i.e. "current" object form which can be input into the graphic window. The choice is made by indicating with the mouse cursor and clicking the button. Feedback of a choice after it has been made is effected by highlighting the associated icon. Block, Cylinder, Pyramid and Sphere are some of the implementations. The description of the method of inputting is given in a subsequent section.

3.4 Design/Structure window

A model 18 is displayed in the design and strucuture windows 12, 14. As already stated, two methods of representation are used, one which shows dimensions and position of the parts of the model, and one which shows the construction and assembly of these parts.

In the structure representation in the window at the bottom right the hierarchical construction of the model is shown in the form of a tree structure 18'.

These two windows are closely connected and accordingly offer partially these same command facilities.

3.4.1 Select

A part of the model can be selected by clicking the "select" button on the mouse. A choice is made by indicating a part of the object by means of the mouse in the design window or indicating a branch in the structure window 14. Selection is indicated by a different colour (both in the graphic and in the structural representation).

3.4.2 Copy (Fig. 2)

Pressing the second mouse button (B) displays a pop-up menu 20 containing the commands that are possible for that window. Structure and design have a number of identical commands, namely: "Copy" "Cut" and "Paste". "Copy" ensures that the part 22 of the model selected at that time is placed in a buffer (the model is therefore not affected). If no selection is made the announcement "No element selected" appaers.

3.4.3 Cut

This command removes the selected part of the model and places that part in a buffer (the model is changed). If nothing is selected the announcement "No element selected" appears.

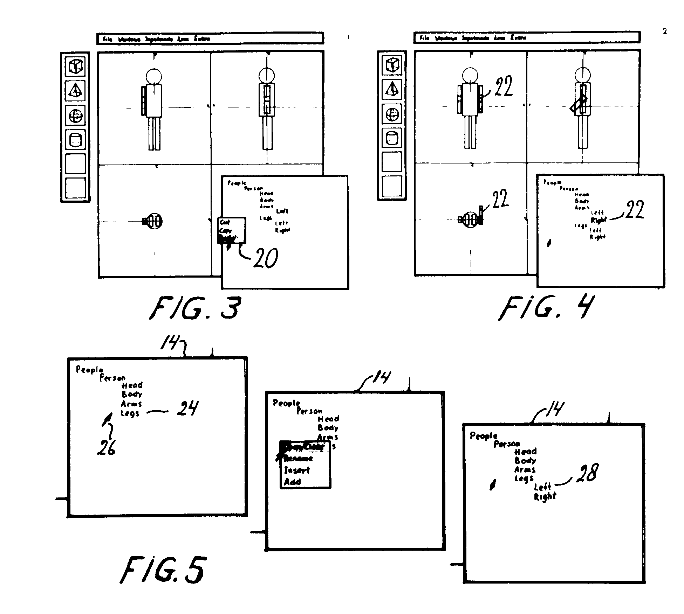

3.4.4 Paste (Fig. 3, 4)

"Paste" pastes the part 22 which has been put in the buffer by the copy or cut command to that part of the object selected at that time. Execution of the command "paste" does not empty the buffer and it is therefore quite simple to obtain several copies of one and the same part by pasting it several times. If the paste buffer is empty the announcement "Nothing in paste buffer" appears.

### 3.5 Structure window

Commands which apply only to structure:

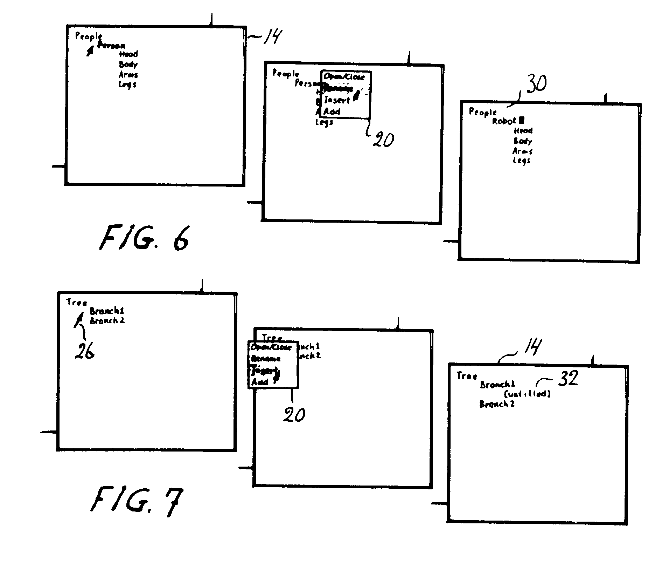

### 3.5.1 Open/Close (Fig. 5)

With this command the junction 24 of the structure indicated by the cursor 26 is opened if it is closed and closed if it is open. If a junction is open it means that the bottom branch 28 is displayed in the structure window (and vice-versa for a closed junction).

The user is frequently concered with or interested in only a restricted part of a model (a single branch actually therefore). Depiction of the entire tree would be confusing in such cases (not to mention the fact that an entirely open tree will in most cases not fit within the structure window).

### 3.5.2 Rename (Fig. 6)

Since a structure representation with nameless junction tells the user just about as much as no representation at all, he must be enabled to carry out logical naming. By indicating a junction and selecting Rename in the pop-up menu 20, it is possible to type in a new name 30 or change an old name.

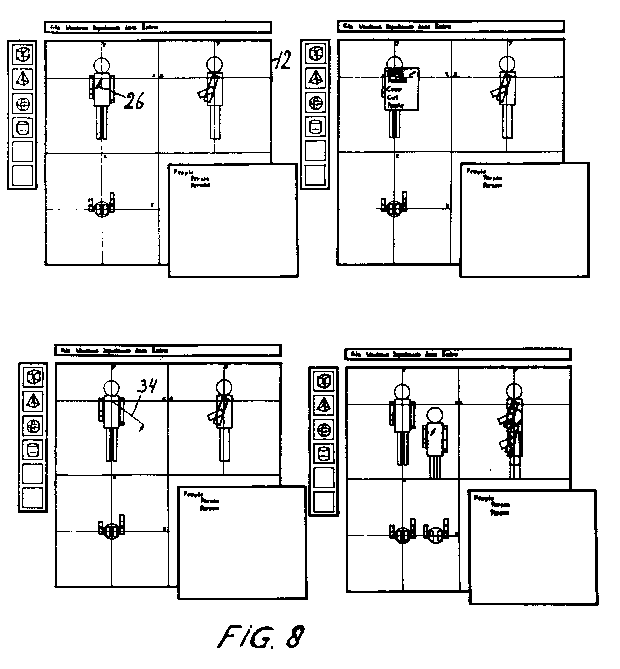

### 3.5.3 Insert (Fig. 7)

To be able to expand a structure it must be possible to create new junctions. This can be done by "Insert" or "Add". "Insert" ensures that a new (and hence empty) junction 32 forms on a hierarchical level lower than the junction that was indicated when the order was given.

The default name of the new junction is "[untitled]".

A logical name can be given with "Rename".

### 3.5.4 Add

"Add" is comparable to "Insert", but the junction appears at similar hierarchical level. The default name is again "[untitled]".

### 3.6 Design window

Commands which apply only to the design window:

### 3.6.1 Move (Fig. 8)

The selected part of the model can be moved by the "Move" command. This can take place in any desired view. A line 34 (rubber band) can be shifted, from the position where the cursor 26 was when the "Move" command was selected, in any view along a maximum of two axes to the current cursor position. What "Move" really does is not so much to shift the objects which come under the selected junction, as to define a new origin for the junction (this origin is graphically represented by crossed axes). Since all the objects which fall under the junction are defined with respect thereto, this has the same effect as moving the branch. It is also possible to engage the entire object and move it over the screen (dragging).

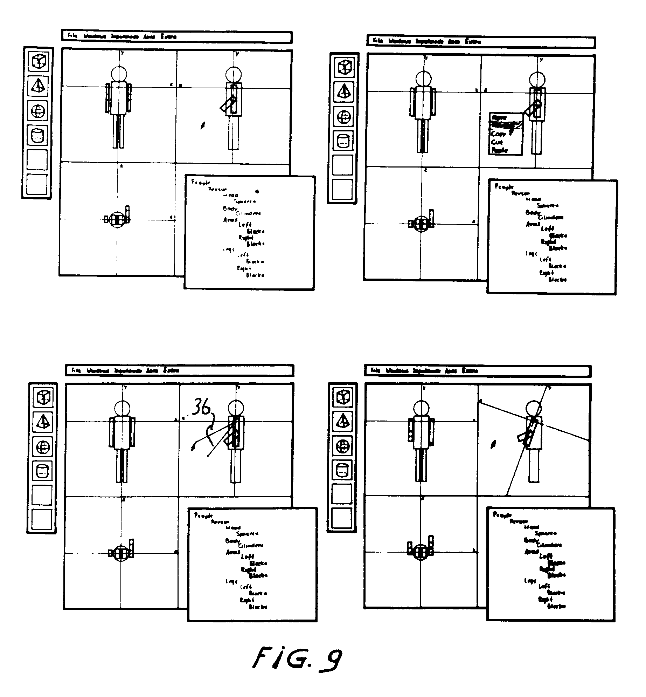

### 3.6.2 Rotate (Fig. 9)

This command is analogous to "Move". Instead of the origin, the orientation of the coordinate axes is changed. This has the same effect as rotation of the selected object. When it is impossible to rotate the entire object in real time with the cursor this is indicated by a number of "rubber bands" 36 which represent the beginning and end points of the rotation. Rotation is possible about one axis per view (i.e. the axis "perpendicular to the screen")

### 3.7 Command window

In this window it is possible to select from a number of menus containing commands which have a more global character. The commands are grouped in various categories and are explained in the following paragraphs.

### 3.7.1 File menu

File commands are as follows:
- "Save": Write out the model under the file name (use default name)
- "Load": Read model from disk
- "New": Erase model in memory (ask for confirmation)
- "Exit program": Leave the program, also ask for confirmation.

### 3.7.2 Notepad

The interface supports a notepad function which can be called up by selecting "notepad on" in the command window. As soon as the user has called on this command, the cursor changes into a representation of a very tiny pencil as a sign that a "transparent notepad sheet" has been placed over the design window. On this the user can:
- draw, by moving the mouse and pressing mouse button A,
- type, by positioning the cursor and inputting text by the keyboard.

Advantages of a notepad on the screen are that the notepad information is always present in the system, the user's attention remains directed to the screen, and the notepad can be assigned many other extra functions apart from that indicated. The menu contains the following commands:
- "Erase on/off": toggle between erase and draw "mode" (cursor alternates between pencil and eraser)
- "Next page": go to the next page of the notepad
- "Previous page": go to the previous page of the notepad
- "Clear page": erase the visible page from the notepad.
Ask for confirmation.

### 3.7.3 Input mode menu

This menu shows the theoretical extension to other basic elements for inputting. In the embodiment described, only the inputting of primitives is implemented in the interface (the knwon basic shapes). Extension to sweep-generated shapes might be integrated into the interface relatively easily. After "Sweep" has been selected in the input-mode menu it is possible, for example, to replace the icon menu by another menu with specific "sweep" icons, with which it is possible to create shapes in the design window.

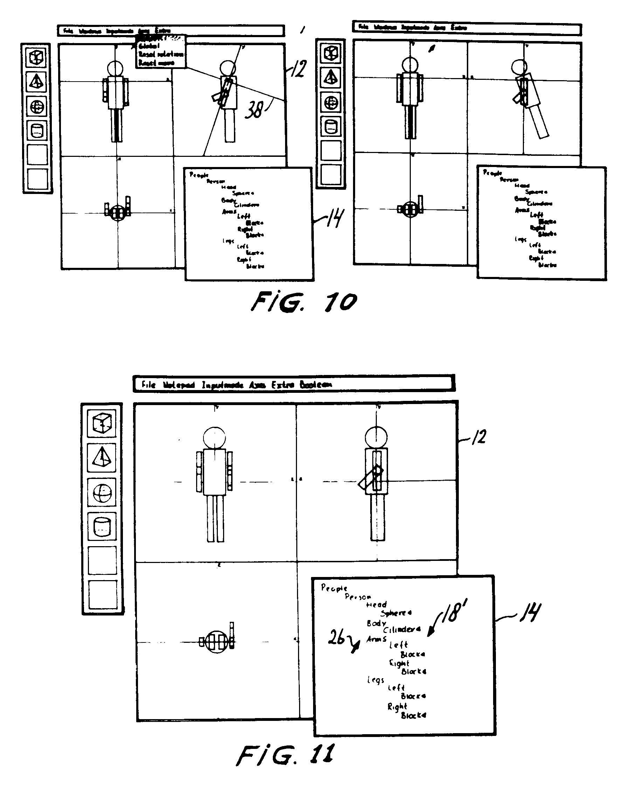

### 3.7.4 Axes menu (Fig. 10)

The "Axes" menu contains a number of extra commands related to the axes systems of the model. The commands designated for this are "Move" and "Rotate" which influence the origin and orientation respectively of the system of axes of a selected junction. "Axes" contains the following comands:
- "Local": the graphic representation is depicted with the system of axes 38 of the selected junction as a "world coordinate system".
- "Global": the graphic representation is depicted with respect to the original default world coordinate system.
- "Reset rotation": the orientation of the system selected is reset (i.e. identical to the orientation of the world coordinate system)
- "Reset move": the origin of the system selected is reset (i.e. identical to the origin of the world coordinate system).

### 3.7.5 Extra menu

Commends which facilitate working with the user-interface are also implemented in the extra menu.
- "Zoom reset": display with default zoom setting
- "Enlarge": Zoom in

- "Reduce": Zoom out
- "Snap on/off": Switch snap function on or off ("snap" ensures that the cursor jumps to the closest position when identifying positions)
- "Grid on/off": The cursor has a "preference" for positions lying on an (adjustable) grid (comparable to snap).

## 4 Announcements

At various places in the program an announcement of the system is given to the user. A distinction is made between announcements which require an "answer" and announcements which are given solely "for information". An example of the first is reading in of a file. The response to this is the announcement "enter file name to load:" after which the user can type in a suitable name. An example of the second is an error announcement (e.g. "nothing selected").

Announcements take place in a separate (small) windown. An announcement may have a movable or a fixed position on the screen. Announcements requiring an answer appear at a fixed position since they are the result of a purposeful action by the user and he therefore has knowledge of the position where the announcement appears. Error announcements appear at a non-fixed position, i.e. near the cursor. An error announcement is generally a result of a faulty action by the user who, accordingly, does not expect any announcement. In that case, if the announcement were to appear at a fixed position, it migh easily be overlooked (a remedy frequently used for this is for the announcement to be accompanied by a penetrating acoustic signal ("bleep"). Placing the announcement near the cursor (the most obvious point of attention for the user) renders this disturbing noise unnecessary.

It is not clear to the system when an announcement is read (this applies particularly to announcements not requiring an answer). One possibility is to show the announcement on the screen for a given time (e.g. 5 seconds). However, it is more reliable to let the user give a confirmation so that there is no risk of unnoticed reports. Confirmation is provided by pressing in mouse button B. A pop-up menu apears containing "Okay" in the case of an error announcement, a menu having the choices of "Okay" and "Cancel" in the case of an announcement in which an answer is given. "Cancel" ensures that the action which caused the announcement is discontinued.

## 5 Inputting of primitives

The inputting of four primitive forms is implemented in the interface. The forms are Block, Cylinder, Pyramid and Sphere. All forms are input correspondingly. This inputting process takes place in a number of stages as follows:

1. Select primitive by clicking associated icon in left hand window 10.
2. By means of the cursor (which changes from an arrow to a cross) a position is indicated in one of the three views and button A is pressed.
3. A "rubber" image now appears from the selected primitive between the position chosen in the second step and the cursor position. The shape of the "rubber band" depends on which pri mitive is input (Block: rectangle, Cylinder: circle, Spere: circle, Pryamid: rectangle).

This step is completed by pressing button A again. The shape is then determined in one view, i.e. the shape is established with respect to two coordinate axes. The coordinate axes concerned depend on the view selected.

4. To determine the third coordinate a change has to be made to one of the other two views. In this a third position is indicated by the cursor and button A pressed. Of this position only the relevant coordinate is taken over (i.e. the one that was lacking in the first view).
5. The lacking view now appears between the position selected in step four and the cursor position. The action is completed by again pressing the button. The position and dimension of the primitive are thus completely determined and become definite part of the model.

Since the risk of faults is increased as the number of steps required for implementing an action increases, the user has an "Undo" facility at each step by pressing mouse button B. A pop-up menu then appears containing the command "Undo". When this is selected, the program goes back one step so to speak. By selecting "Undo" several times in succession it is possible to go back step by step to step 1. If "Undo" is then again implemented, the program leaves the input mode (cursor changes back from cross to arrow).

As stated in the description of step 3, the shapes used on inputting have different characteristic views. For example, all the views of Block have the shape of a rectangle while Cylinder has a circle and two rectangles as view. A fixed inputting sequence is kept to for the various primitives. For Block and Sphere this is not so important since they generate the same shape type for each view. For Cylinder and Pyramid conditions are different; initially the basic plane is input. (Cylinder: circle, Pyramid: rectangle), since then only one shape type remains for the second view (Cylinder: rectangle, Pyramid: triangle). If, for example, a rectangle were drawn as the first view of Cylinder, the user would have to indicate whether it is a rectangle or a circle for the second view to be determined, and this therefore would mean an extra step in the inputting procedure.

## 6. Example

To give an idea of the operation of the interface, a session will now be described in which a design example is manipulated. The example is short and superficial and intended only to give an overall idea of how the operation looks and functions.

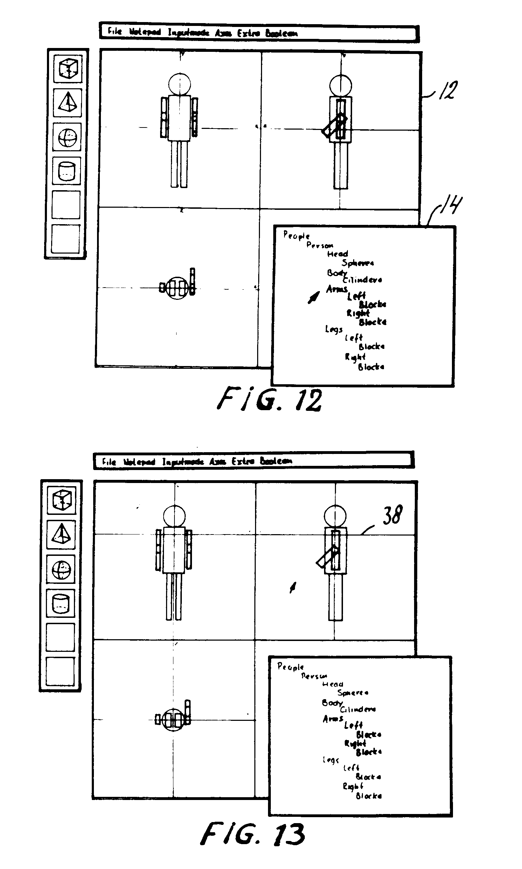

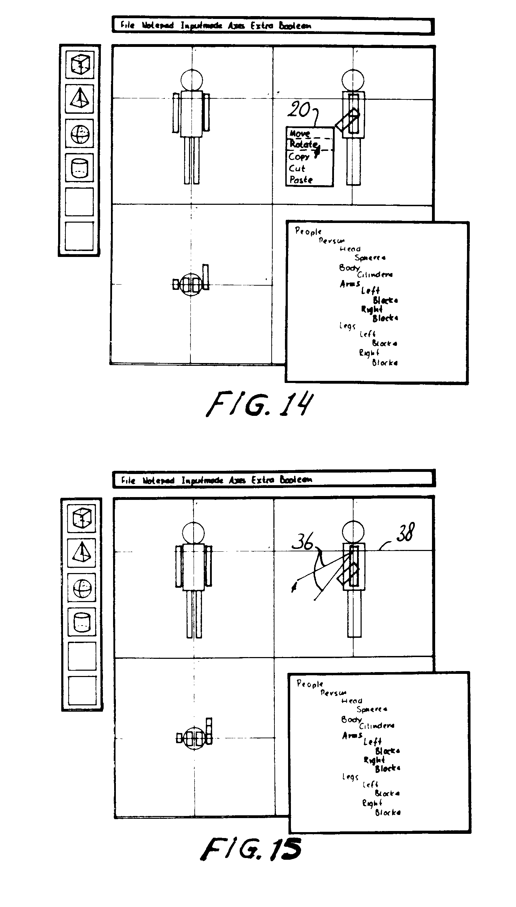

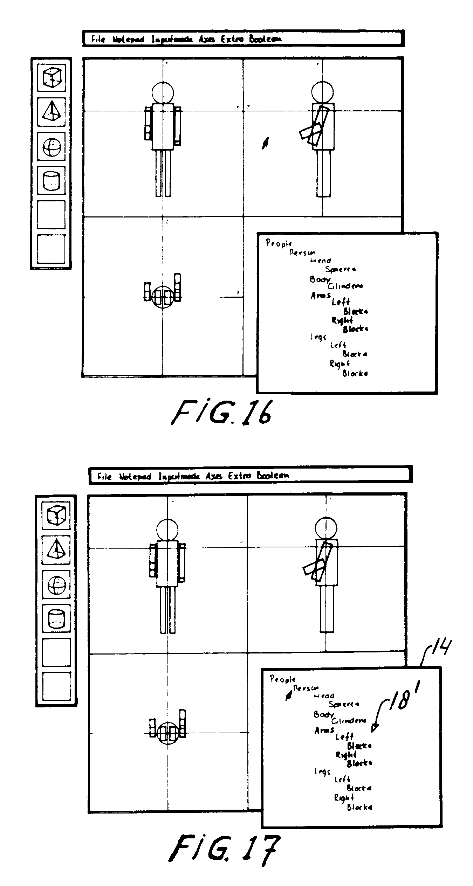

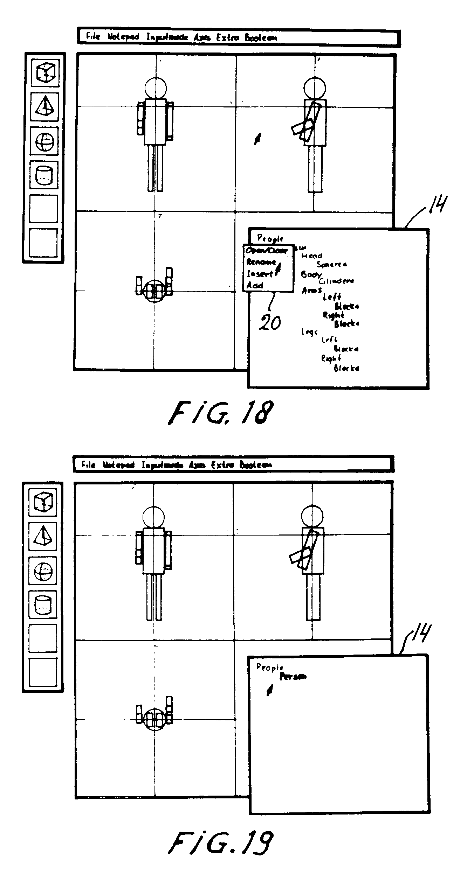

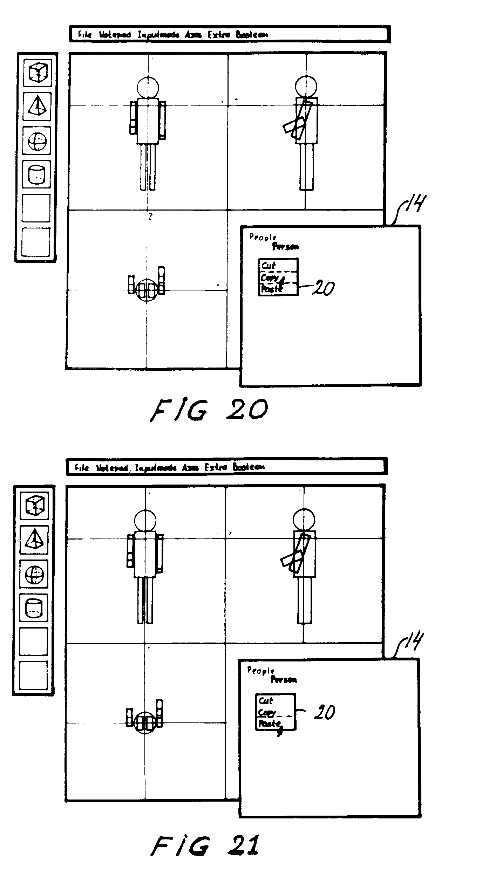

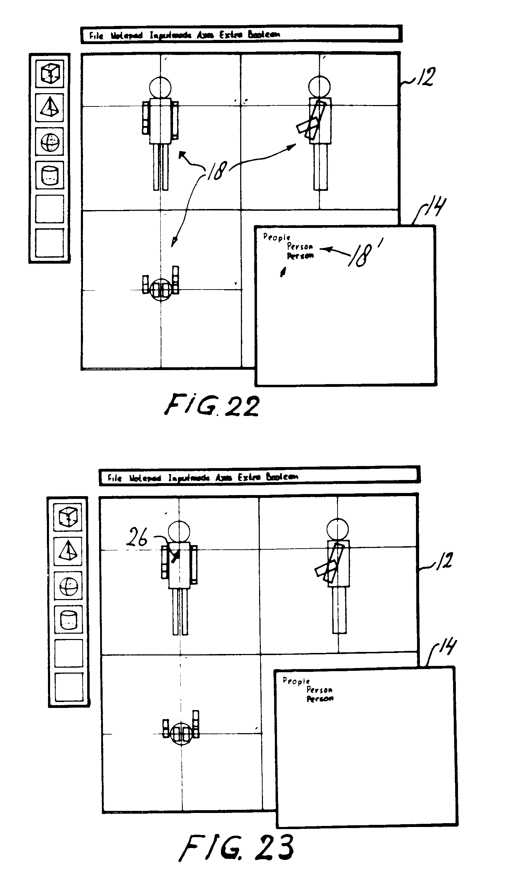

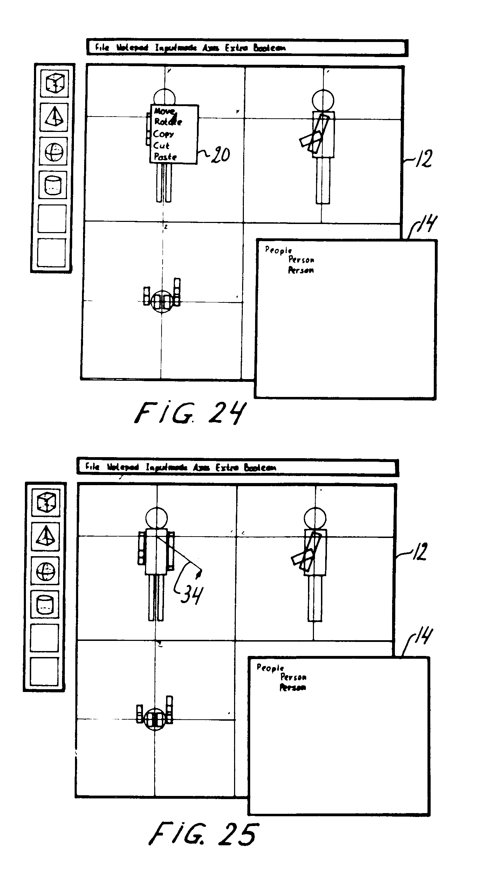

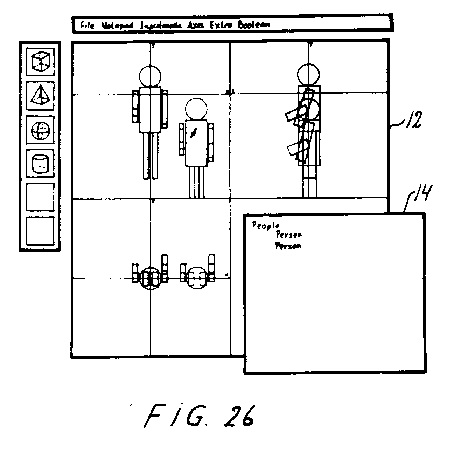

- The hierarchical construction of the model is shown in the form of a tree structure $18'$ in the structure representation in window 14 at the bottom right. In this structure the branch "Arms" is indicated by the cursor 26 and then selected by pressing in mouse button A (Fig. 11).
- In order to show that selection has taken place, branch "Arms" and everything else falling thereunder is highlighted in the structure representation. The same applies to the design window (the graphic representation), (Fig. 12).
- The decision is taken to rotate the arms about the x-axis. This is done in the view at the top right in Fig. 13. The rotation is about the centre point of the axes system 38 shown.
- By pressing in mouse button B a pop-up menu 20 appears from which the command "Rotate" is selected. (Fig. 14).
- Two "rubber bands" 36 appear from the centre point of the axes system 38, one towards the point where the "Rotate" command was given and one towards the present cursor position. The angle formed by these two lines indicates the magnitude of the rotation. The command is terminated by again pressing the mouse button (Fig. 15).
- After termination of the command the rotation is added to the selected part of the model and the whole thing is re-drawn. (Fig. 16).
- The cursor is brought to the structure representation $18'$. The branch with the name "People/Person" is indicated. (Fig. 17).
- The command "Open/Close" is now given. This means that everything under Person becomes invisible if it was visible, or vice-versa. The model is otherwise not affected. Open/Close affects only the representation of the model in the structure window 14. (Fig. 18).
- Person is selected with button A. (Fig. 19).
- The command "Copy" is selected. This means that part of the model that was selected (People/Person in this case) is copied to a buffer. (Fig. 20).
- By carrying out "Paste" now, the copy just made is pasted to the selected element. There are now therefore two junctions with the name Person under People (Fig. 21).
- However, only one Person is shown in the graphic representation 18 since the copy is in the same place as the original (Fig. 22)
- A movement of the second Person must therefore be carried out. First of all, therefore, a point is indicated in the view in the top left, in this case the origin of the system of axes. (Fig. 23)
- In this view a movement is possible in the x or y direction by selecting the command "Move" from the pop-up menu 20. (Fig. 24)
- A "rubber band" 34 appears which indicates where the previously indicated point is to go if the "Move" command is terminated at that instant. Termination is effected by pressing mouse button A. (Fig. 25)
- The selected part of the model (the "second" Person) now obtains the appointed place and the model is re-drawn. (Fig. 26)

## Claims

1. A CAD-system using a method of generating and processing models of two or three dimensional objects in a computer and of reproducing said models on a display,
   - in which said models are built up by means of geometric operations such as moving, rotating, enlarging, reducing and/or Boolean operations, such as connecting, forming points of intersection, in accordance with the user's instructions, from elements whose shapes are already determined by data stored in or input into the system, it being possible for said elements in turn to be built up from elements of a lower hierarchical level,

- in which a menu of commands is shown on the display outside the image of the model so that the user can select specific command by marking the associated place on the menu with a pointer whose position is controllable by the user by means of an inputting device, or select a specific lowest level element by marking a point within said element on the image using said pointer and

- in that there is stored for each element in each hierarchical level a word and also data concerning the hierarchical relationship between said element and hierarchically higher and lower elements, characterised

- in that a structure diagram is reproduced on the display, together with the image of the model, in which diagram each element is indicated by its word at a place corresponding to the element to which it belongs, and

- in that when the user marks a word in the structure diagram with the pointer the appropriate element and all its comprised lower level elements are selected, and any operation to be carried out is carried out on said element and all said comprised lower level elements.

2. A CAD-system using a method according to claim 1, characterised in that an element in the representation of the object or in a word of the structure diagram which is marked with the pointer, is reproduced on the representation of the object and in the structure diagram in an optically conspicuous manner by special brightness, colour or the like, as are also the various hierarchically lower elements or words associated with that element.

3. A CAD-system using a method according to claim 1 or 2, characterised in that after marking of a word in the structure diagram and after the inputting of a specific instruction, all the lower-level words associated with that word in the structure diagram are removed, without the corresponding representation of the model in the system or in the image reproduction of the object being changed.

4. A CAD-system using a method according to any one of the preceding claims, characterised in that after an element of the object has been marked in the image reproduction or in a word of the structure diagram, in response to a subsequent instruction input by the user by the inputting device, a menu is displayed which contains a given choice of instructions, the menu being displayed on the display at the place where the pointer was situated at the time of the subsequent input instruction.

5. A CAD-system using a method according to claim 4, characterised in that when the pointer on calling on the menu is situated in a window of the display reserved for the image reproduction of the model, the type of instructions in the menu differs from the type of instructions in the menu which appears when the pointer, on calling on the menu, is situated in a window of the display reserved for the reproduction of the structure diagram.

6. A CAD-system using a method according to any one of the preceding claims, characterised in that four windows are displayed on the display in the form of a 2 x 2 matrix, three windows being used as image windows for the reproduction of the front, side and top views of the object, while the fourth window is used for the reproduction of the structure diagram.

7. A CAD-system using a method according to any one of the preceding claims, characterised in that another window is displayed on the display in which window geometric basic elements such as a square, a pyramid, a sphere or a cylinder are reproduced diagramatically, and a basic element which is marked by the pointer being transferable to one or more image windows.

8. A CAD-system using a method according to claim 7, characterised in that the word associated with the basic element transferred to an image window is input to the structure diagram as a lower-level element associated with the element undergoing processing.

9. A CAD-system using a method according to any one of the preceding claims, characterised in that data concerning a number of complete displays are stored in the system and in that at the user's option the corresponding representation is displayed additively on the display on view.

**Revendications**

1. Système CAO utilisant un procédé permettant de créer et traiter des modèles d'objets à deux ou trois dimensions dans un ordinateur et de reproduire ces modèles sur un visuel,
   - dans lequel les modèles sont construits au moyen d'opérations géométriques telles qu'un déplacement, un pivotement, un agrandissement, une réduction, et/ou d'opérations booléennes, telles que l'assemblage, la formation de points d'intersection, conformément aux instructions de l'utilisateur, à partir d'éléments dont les formes sont déjà déterminées par des données rangées en mémoire dans le système ou introduites dans celui-ci, la possibilité existant que ces éléments soient eux-mêmes construits à partir d'éléments d'un niveau hiérarchique inférieur,
   - dans lequel un menu d'ordres est présenté sur le visuel à l'extérieur de l'image du modèle, de telle façon que l'utilisateur puisse sélectionner un ordre particulier en marquant l'emplacement associé du menu au moyen d'un pointeur dont la position peut être commandée par l'utilisateur au moyen d'un dispositif d'introduction, ou puisse sélectionner un élément particulier de niveau plus faible en marquant un point situé dans les limites de l'élément, sur l'image, en utilisant le pointeur, et
   - dans lequel, pour chaque élément faisant partie de chaque niveau hiérarchique, il est rangé en mémoire un mot et aussi des données concernant la relation hiérarchique existant entre cet élément et des éléments hiérarchiquement supérieurs et inférieurs,

   caractérisé
   - en ce qu'un diagramme de structure est reproduit sur le visuel, en même temps que l'image du modèle, diagramme dans lequel chaque élément est indiqué par son mot en un emplacement correspondant à l'élément auquel il appartient, et
   - en ce que, lorsque l'utilisateur marque un mot dans le diagramme de structure au moyen du pointeur, l'élément approprié et tous ses éléments compris de niveau inférieur sont sélectionnés et n'importe quelle opération à exécuter est exécutée sur ledit élément et tous les éléments compris de niveau inférieur.

2. Système CAO utilisant un procédé conforme à la revendication 1, caractérisé en ce qu'un élément se trouvant dans la représentation de l'objet ou dans un mot du diagramme de structure, élément qui est marqué au moyen du pointeur, est reproduit sur la représentation de l'objet et dans le diagramme de structure d'une manière attirant le regard par voie optique , grâce à une luminosité ou une couleur spéciale ou analogue, de même que le sont aussi les divers éléments ou mots hiérarchiquement inférieurs associés à cet élément.

3. Système CAO utilisant un procédé suivant l'une des revendications 1 et 2, caractérisé en ce qu'après le marquage d'un mot sur le diagramme de structure et après l'introduction d'une instruction particulière, tous les mots de niveau inférieur associés à ce mot dans le diagramme de structure sont éliminés, sans que la représentation correspondante du modèle dans le système ou dans la reproduction de l'objet sous forme d'image soit modifiée.

4. Système CAO utilisant un procédé suivant l'une quelconque des revendications précédentes, caractérisé en ce qu'après qu'un élément de l'objet ait été marqué dans la reproduction formant l'image ou dans un mot du diagramme de structure, en réponse à l'introduction ultérieure d'une instruction par l'utilisateur au moyen du dispositif d'introduction, il est affiché un menu qui contient un choix donné d'instructions, ce menu étant sur le visuel à l'emplacement où le pointeur était situé au moment de l'instruction de l'introduction ultérieure.

5. Système CAO utilisant un procédé suivant la revendication 4, caractérisé en ce que, lorsqu'en appelant le menu, le pointeur est situé dans une fenêtre du visuel qui est réservée à la reproduction du modèle sous forme d'image, le type d'instructions dans le menu diffère du type d'instructions dans le menu qui apparaît lorsqu'en appelant le menu, le pointeur est situé dans une fenêtre du visuel qui est réservée à la reproduction du diagramme de structure.

6. Système CAO utilisant un procédé suivant l'une des revendications précédentes, caractérisé en ce que quatre fenêtres sont visualisées sur le visuel sous la forme d'une matrice 2 x 2, trois fenêtres étant utilisées en tant que fenêtres d'image pour la reproduction de la vue de face, la vue de côté et la vue de dessus de l'objet, tandis que la quatrième fenêtre est utilisée pour la reproduction du diagramme de structure.

7. Système CAO utilisant un procédé suivant l'une quelconque des revendications précédentes, caractérisé en ce qu'une autre fenêtre est visualisée sur le visuel, fenêtre dans laquelle des éléments géométriques de base, tels qu'un parallélépipède, une pyramide, une sphère ou un cylindre, sont reproduits schématiquement, et en ce qu'un élément de base qui est marqué au moyen du pointeur peut être transféré vers une ou plusieurs fenêtres d'image.

8. Système CAO utilisant un procédé suivant la revendication 7, caractérisé en ce que le mot associé à l'élément de base transféré vers une fenêtre d'image est entré dans le diagramme de structure en tant qu'élément de niveau inférieur associé à l'élément soumis au traitement.

9. Système CAO utilisant un procédé suivant l'une quelconque des revendications précédentes, caractérisé en ce que des données concernant un certain nombre de pages écran complètes sont rangées en mémoire dans le système et en ce qu'au choix de l'utilisateur, la représentation correspondante est visualisée en supplément sur la page alors visible.

**Patentansprüche**

1. CAD-System, das mit einem Verfahren zur Erzeugung und Bearbeitung von Modellen 2- oder 3-dimensionaler Objekte in einem Computer und zur Darstellung der Modelle auf einem Anzeigegerät arbeitet, wobei

- die Modelle mit Hilfe geometrischer Operationen wie Verschieben. Drehen, Vergrößern, VerKleinern und / oder Boolscher Operationen wie Vereinigen, Schnittbildung, entsprechend den Befehlen des Benutzers aus Elementen aufgebaut werden, deren Gestalt bereits durch in dem System gespeicherte oder in dieses eingegebene Daten festgelegt ist, wobei die Elemente ihrerseits aus Elementen einer niedrigeren Hierarchiestufe aufgebaut sein können,
- auf dem Anzeigegerät außerhalb des Bildes des Modells ein Menü von Befehlen dargestellt wird, so daß der Benutzer mit Hilfe eines Zeigers, dessen Position durch den Benutzer mit Hilfe eines Eingabegerätes steuerbar ist, einen bestimmten Befehl oder ein bestimmtes Element der niedrigsten Hierarchiestufe auswählen kann, indem er die betreffende Stelle auf dem Bild mit dem Zeiger markiert, und
- für jedes Element jeder Hierarchiestufe ein Wort sowie Daten über die hierarchische Beziehung dieses Elements zu den über- und untergeordneten Elementen gespeichert werden, dadurch gekennzeichnet,
- daß auf dem Anzeigegerät mit dem Bild des Modells ein Strukturdiagramm dargestellt wird, in welchem jedes Element durch sein zugehöriges Wort an einer Stelle angegeben wird, die dem Element entspricht, zu dem es gehört, und
- daß, wenn der Benutzer ein Wort in dem Strukturdiagramm mit dem Zeiger markiert, das betreffende Element und alle zugehörigen Elemente niedrigerer Hierarchiestufen ausgewählt werden und eine auszuführende Operation an diesem Element und allen zugehörigen Elementen niedrigerer Hierarchiestufen ausgeführt wird.

2. CAD-System, das mit einem Verfahren nach Anspruch 1 arbeitet, dadurch gekennzeichnet, dass ein Element in der Darstellung des Objekts oder in einem Wort des Strukturdiagrammes, das mit dem Zeiger markiet wurde, und sämtliche zu diesem Element gehörende Unterelemente oder Wörter in der Darstellung des Objektes und in dem Strukturdiagramm durch besondere Helligkeitswerte, besondere Farbgebung oder dergleichen optisch hervorgehoben werden.

3. CAD-System, das mit einem Verfahren nach Anspruch 1 oder 2 arbeitet, dadurch gekennzeichnet, daß nach dem Markieren eines Wortes in dem Strukturdiagramm und nach der Eingabe eines bestimmten Befehls sämtliche zu diesem Wort gehörenden Wörter in dem Strukturdiagramm entfernt werden, ohne daß die Repräsentation des Modells in dem System oder die bildliche Darstellung des Objektes verändert werden.

4. CAD-System, das mit einem Verfahren nach einem der vorstehenden Ansprüche arbeitet, dadurch gekennzeichnet, daß nach der Markierung eines Elements des Objektes in der bildlichen Darstellung

13

oder eines Wortes in dem Strukturdiagramm auf einen weiteren über das Eingabegerät eingegeben Befehl des Benutzers ein Menü, das eine bestimmte Auswahl von Befehlen enthält, an der Stelle des Bildes eingeblendet wird, an der sich der Zeiger zum Zeitpunkt der Eingabe des Befehls befunden hat.

5. CAD-System, das mit einem Verfahren nach Anspruch 4 arbeitet, dadurch gekennzeichnet, daß, wenn sich der Zeiger beim Aufruf des Menüs in einem für die bildliche Darstellung des Modells reservierten Fenster des Bildschirms befunden hat, die Art der Befehle in dem Menü von der Art der Befehle in dem Menü verschieden ist, das erscheint, wenn sich der Zeiger beim Aufruf des Menüs in einem für die Darstellung des Strukturdiagramms reservierten Fenster des Bildschirms befunden hat.

6. CAD-System, das mit einem Verfahren nach einem der vorstehenden Ansprüche arbeitet, dadurch gekennzeichnet, daß auf dem Bildschirm vier nach Art einer 2x2-Matrix angeordnete Fenster dargestellt werden, von denen drei Fenster zur Darstellung von Grundriß, Seitenriß und Aufriß des Objekts dienen, während das vierte Fenster zur Darstellung des Strukturdiagramms dient.

7. CAD-System, das mit einem Verfahren nach einem der vorstehenden Ansprüche arbeitet, dadurch gekennzeichnet, dass auf dem Bildschirm ein weiteres Fenster dargestellt wird, in dem geometrische Grundelemente wie ein Quader, eine Pyramide, eine Kugel oder ein Zylinder versinnbildlicht sind und dass ein Grundelement, das mit dem Zeiger markiert wird, in ein oder mehrere Fenster für die bildliche Darstellung des Objekts übertragen werden kann.

8. CAD-System, das mit einem Verfahren nach Anspruch 7 arbeitet, dadurch gekennzeichnet, daß das Wort, das dem in ein Bildfenster übertragenen Grundelement zugeordnet ist, in dem Strukturdiagramm als ein Unterelement zu dem gerade bearbeiteten Element eingesetzt wird.

9. CAD-System, das mit einem Verfahren nach einem der vorstehenden Ansprüche arbeitet, dadurch gekennzeichnet, daß in dem System Daten über eine Anzahl vollständiger Bildschirmbilder gespeichert werden und daß die entsprechenden Darstellungen nach Wahl des Benutzers dem auf dem Bildschirm dargestellten Bild überlagert werden.

FIG. 1

FIG. 2

FIG. 3

FIG. 4

FIG. 5

FIG. 6

FIG. 7

FiG. 8

18

FIG. 9

**FIG. 10**

**FIG. 11**

FIG. 12

FIG. 13

FIG. 14

FIG. 15

FIG. 16

FIG. 17

FIG. 18

FIG. 19

FIG 20

FIG 21

FIG. 22

FIG. 23

FIG. 24

FIG. 25

FIG. 26